Europäisches Patentamt

European Patent Office

Office européen des brevets

(19)

(11) Numéro de publication : **0 289 486**
**B1**

(12) **FASCICULE DE BREVET EUROPÉEN**

(45) Date de publication du fascicule du brevet :
23.11.89

(21) Numéro de dépôt : 86900037.2

(22) Date de dépôt : 30.12.85

(86) Numéro de dépôt international :
PCT/BE 85/00023

(87) Numéro de publication internationale :
WO/8704196 (16.07.87 Gazette 87/15)

(51) Int. Cl.⁴ : **B 01 D 33/04**

(54) **FILTRE A COURROIE.**

(43) Date de publication de la demande :
09.11.88 Bulletin 88/45

(45) Mention de la délivrance du brevet :
23.11.89 Bulletin 89/47

(84) Etats contractants désignés :
BE DE GB IT NL

(56) Documents cités :
EP-A- 0 186 545
FR-A- 880 582
FR-A- 2 018 198
FR-A- 2 053 700
FR-A- 2 567 040
US-A- 2 377 252
US-A- 3 939 076

(73) Titulaire : **BIRD MACHINE INTERNATIONAL, INC.**
**South Walpole**
**MA 02071 (US)**

(72) Inventeur : **KUROWSKI, Serge**
**Rue des Mésanges, 5**
**B-4121 Neupre (BE)**

(74) Mandataire : **Claeys, Pierre et al**
**Bureau Gevers rue de Livourne 7 bte 1**
**B-1050 Bruxelles (BE)**

## Description

La présente invention est relative à un filtre à courroie comprenant une courroie continue, qui est déplaçable par des moyens d'entraînement le long d'un trajet continu, une toile filtrante supportée par des ondes profilées dans la courroie, transversalement ou en oblique par rapport au sens de déplacement de cette dernière, au moins une boîte à vide où débouchent des orifices prévus à travers la courroie, et des supports stationnaires sur lesquels la courroie peut coulisser pendant son déplacement.

On connait déjà des filtres à courroie de ce genre (voir par exemple, la demande de brevet britannique n° 2 011 797 A). Ces filtres à courroie horizontaux, sous vide, présentent une courroie rainurée continue en matière souple, qui se déplace au-dessus d'une boîte à vide longitudinale et dont le mouvement est assuré par des tambours autour desquels la courroie s'enroule. Ces filtres sous vide sont très souvent utilisés pour séparer des liquides mélangés à des solides. Une application typique connue est celle de la production d'acide phosphorique provenant d'une attaque de minérai phosphaté par de l'acide sulfurique. A partir de la bouillie produite on sépare l'acide phosphorique (phase liquide) et le gypse (phase solide) à l'aide d'un tel filtre à vide.

Ces filtres à courroie connus présentent les inconvénients suivants :

la largeur de la courroie moulée en matière caoutchouteuse est limitée aux dimensions des presses existant actuellement dans l'industrie du moulage des bandes souples, c'est-à-dire à environ 3 m.

le poids de ce type de courroie est très grand et le montage d'une courroie en matière souple nécessite la finition de la courroie sur toute sa longueur chez le fabricant, l'acheminement sur le chantier, la manutention et le déroulement difficiles sur le filtre, vu ce poids important.

Le guidage de ce genre de courroie est relativement complexe, surtout pour les courroies de grande largeur.

La présente invention a pour but d'éviter les inconvénients mentionnés ci-dessus, en améliorant même les propriétés de filtrage du filtre à courroie mis en œuvre.

On a résolu ce problème, suivant l'invention, par un filtre à courroie, tel que décrit dans le préambule de la revendication 1, ce filtre étant caractérisé en ce que la courroie est une courroie composite qui comprend une bande continue en matière rigide, rendue flexible par un profil d'ondes transversales ou obliques par rapport au sens de déplacement et de section constante ou non dans le sens transversal au déplacement, et au moins deux courroies de support continues en matière élastique qui sont entraînées par les moyens d'entraînement susdits, ces courroies de support ayant une largeur nettement inférieure à celle de la bande profilée, coulissant sur les supports stationnaires pendant le déplacement de la courroie composite et étant capables de coopérer avec la bande profilée, de façon à permettre l'entraînement mécanique de celle-ci, au moins une des courroies de support présentant les orifices susdits qui, en communication avec des ouvertures correspondantes prévues dans la bande profilée, permettent une liaison étanche entre la ou les boîtes à vide et l'espace compris entre la toile filtrante et la bande profilée.

Suivant une forme de réalisation de l'invention, chaque boîte à vide, qui s'étend longitudinalement sur une partie du trajet de déplacement de la courroie composite, présente, de part et d'autre de ses bords longitudinaux, un desdits supports stationnaires.

Suivant une forme de réalisation avantageuse de l'invention, la bande profilée est formée de tronçons de tôle profilée, découpés à une dimension correspondant à la largeur de la bande profilée, agencés l'un à côté de l'autre transversalement au sens de déplacement de la courroie composite et reliés l'un à l'autre de manière étanche.

D'autres détails et particularités de l'invention ressortiront de la description donnée ci-après, à titre non limitatif et avec référence aux dessins annexés.

La figure 1 représente une vue en perspective, brisée, de la zone de filtrage d'un filtre à courroie suivant l'invention.

La figure 2 représente une vue en coupe longitudinale, suivant le plan II-II, de la figure 1.

La figure 3 représente une vue en perspective du détail III de la figure 1.

La figure 4 représente une vue en perspective, brisée, du détail IV de la figure 1.

La figure 5 représente une vue en coupe partielle, schématique, d'un des tambours autour desquels tourne la courroie suivant l'invention.

La figure 6 représente une vue latérale schématique d'un filtre à courroie connu.

Sur les dessins, les éléments analogues ou identiques sont désignés par les mêmes références.

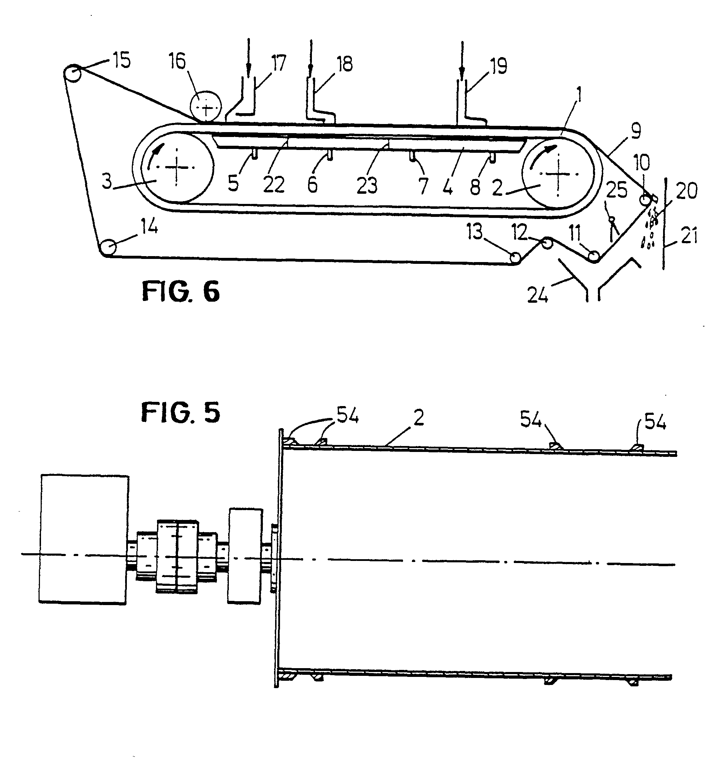

L'appareil représenté sur la figure 6 est constitué d'une courroie sans fin 1 qui s'enroule sur des tambours 2 et 3, dont un au moins est moteur. La partie horizontale supérieure de la courroie est active.

En dessous de celle-ci se trouve une boîte à vide 4 qui est reliée à une pompe à vide, non représentée, par l'intermédiaire des sorties 5, 6, 7 et 8.

Une toile filtrante sans fin 9 s'étend au-dessus de la partie horizontale supérieure de la bande 1 et elle est guidée par plusieurs rouleaux 10 à 16 de manière à ce qu'elle suive la même direction que la courroie entre les tambours 3 et 2. Au-dessus de la boîte à vide 4, la courroie 1 est perforée et permet l'aspiration du filtrat passant à travers la toile 9 dans la boîte à vide 4.

La bouillie à filtrer est répartie sur la toile filtrante au moyen d'une auge à boue 17. Après filtration des eaux mères, le gâteau peut être lavé plusieurs fois par des liqueurs de lavage. Celles-ci sont réparties par des auges ou rampes de lavage 18 et 19.

Le nombre de lavages est déterminé par le procédé. Après lavage et essorage du gâteau formé 20 par la filtration, celui-ci se détache de la toile au passage du rouleau 10 et tombe dans une trémie 21 où il est guidé vers un procédé d'extraction quelconque.

Les filtrats sont, comme déjà décrit, récoltés par la boîte à vide 4 et ils s'écoulent à travers les orifices de sortie 5 à 8.

Pour éviter le mélange des filtrats à l'intérieur de la boîte à vide, celle-ci est compartimentée par des cloisons 22 et 23.

Après déchargement du gâteau 20 dans la trémie 21, la toile 9 défile au-dessus d'une deuxième trémie 24, au-dessus de laquelle un jet de liquide 25 lave la toile en permanence.

Cette disposition est appliquée lorsque l'on veut éviter le mélange des liquides de lavage de la toile avec le gâteau déchargé 20.

Le filtre à courroie représenté sur la figure 6 est un type de filtre à courroie connu, qui a été décrit ci-dessus uniquement en vue de permettre une compréhension globale du fonctionnement des filtres à courroie.

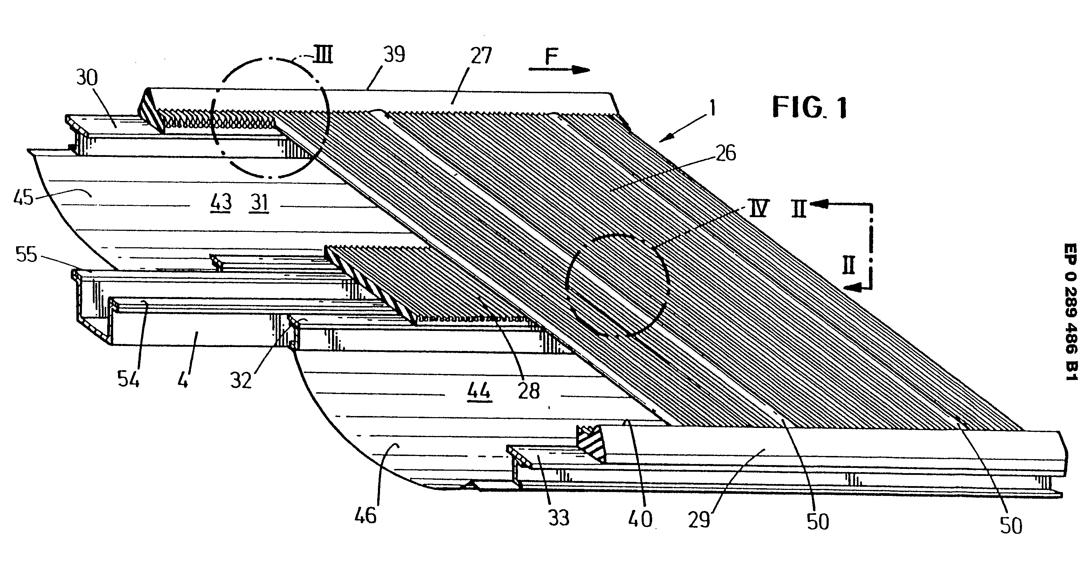

Sur la figure 1 est représentée d'une manière détaillée une courroie composite 1, telle qu'utilisée sur un filtre à courroie suivant l'invention. Cette courroie composite comprend une bande continue 26 en matière rigide, rendue flexible par un profil d'ondes transversales ou obliques par rapport au sens de déplacement, désigné par la flèche F. Cette bande profilée 26 peut notamment être fabriquée à partir de tôle d'acier profilée ou de tôle en matière plastique dure, extrudée.

La courroie composite 1 comprend en outre plusieurs courroies de support continues en matière élastique. Selon l'exemple illustré sur la figure 1, trois courroies de ce genre, désignées par les références 27, 28 et 29, sont prévues. Ces courroies de support ont une largeur nettement inférieure à celle de la bande profilée 26, et elles présentent des nervures profilées capables d'entrer en prise avec les ondes de la bande profilée 26, ainsi qu'il sera décrit de manière plus détaillée dans la suite. Ces courroies de support sont entraînées par le tambour moteur 2 ou respectivement 3 du filtre à courroie et elles entraînent dans leur mouvement la bande profilée 26. Pendant ce mouvement, les courroies de support 27 à 29 coulissent sur des supports stationnaires 30 à 33, reliés de manière fixe et non représentée au bâti du filtre à courroie. Ces courroies sont de préférence fabriquées à partir d'une matière souple, de haute résilience, renforcée.

Dans l'exemple de réalisation illustré sur la figure 1, la courroie de support centrale 28 coulisse sur deux supports stationnaires 31 et 32 qui sont agencés de part et d'autre des rebords latéraux 55, 56 de la boîte à vide 4. La courroie du support 28 a donc une largeur supérieure à la distance qui sépare ces deux supports stationnaires 31 et 32. Elle repose également sur les rebords latéraux 55 et 56 susdits.

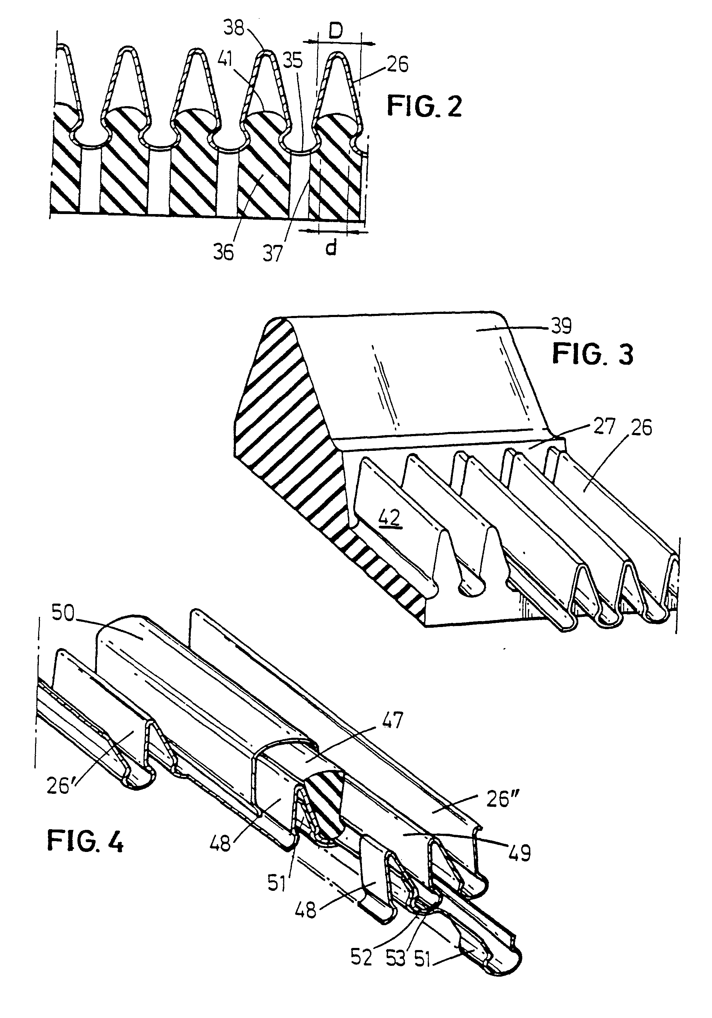

Ainsi qu'il ressort de la figure 2, la bande profilée 26 est pourvue d'ouvertures 35 dans chacun des creux 36 de son profil en section transversale, ces ouvertures 35 sont alignées ou communiquent avec des orifices 37 correspondants façonnés dans la courroie de support centrale 28. Les orifices 37 sont agencés de manière à déboucher dans la boîte à vide 4, en mettant ainsi celle-ci en communication avec l'espace compris entre la bande profilée 26 et la toile filtrante 9, qui repose sur les sommets 38 des ondes de la bande profilée 26.

Pour permettre une prise mécanique favorable entre la courroie de support 28 et la bande profilée 26, tout en assurant une étanchéité parfaite des communications 35, 37 pour le filtrat aspiré dans la boîte à vide 4, la bande profilée illustrée sur la figure 2 présente des creux d'onde successifs 36 entre lesquels les ouvertures laissées libres ont une largeur d plus petite que dans la zone immédiatement supérieure. Par ailleurs les nervures 41 de la courroie de support centrale 28 ont, en section transversale, à leur extrémité libre, une largeur D nettement supérieure à l'ouverture de largeur d susdite et, à leur base, une largeur au moins égale à cette largeur d.

Sur la figure 3 annexée est représenté un détail de la courroie de support latérale 27. Cette courroie 27 et l'autre courroie de support latérale 29, montrée sur la figure 1, présentent chacune, à l'extérieur de la bande profilée 26, un bourrelet en saillie vers le haut 39 et respectivement 40. Ces derniers servent à retenir latéralement la bouillie à filtrer sur la courroie composite 1. Les nervures 42 de ces courroies latérales 39 et 40 non seulement ont, en section transversale, une partie de largeur D nettement supérieure à l'ouverture de largeur d entre deux creux successifs de la bande profilée 26 (voir figure 2), mais elles ont en outre un profil qui, en position de prise avec la bande profilée 26, remplit totalement les ondes de celle-ci. Ceci empêche tout passage latéral de liquide depuis la surface supérieure de la bande profilée 26 vers le bas, ainsi que tout passage d'air ou de gaz depuis l'espace situé en dessous de la bande profilée vers le haut.

Ainsi qu'on peut le voir sur la figure 1, le filtre à courroie illustré comprend deux chambres de surpression 43 et 44 qui sont chacune agencées entre, d'une part, les supports stationnaires 30 et 31 et respectivement 32 et 33 et, d'autre part, la bande profilée 26 elle-même, là où elle ne repose pas sur les courroies de support, et une paroi inférieure 45 et respectivement 46 reliant les supports stationnaires correspondants. Des moyens de pompage d'air non représentés maintiennent à l'intérieur des chambres 43 et 44 une légère surpression, suffisante pour alléger le frottement des courroies de support sur leurs supports stationnaires respectifs pendant le mouvement de la courroie composite. L'agencement de supports stationnaires 31 et 32 de part et d'autre des rebords 55 et 56 de la boîte à vide 4 permet non seulement d'éviter un passage d'air depuis les chambres de surpression dans la boîte à vide, mais aussi d'appliquer un vide plus poussé sans provoquer un frottement plus grand des courroies de support sur les supports stationnaires.

Ainsi qu'on l'a déjà noté, la bande profilée peut être réalisée notamment à partir de tôle d'acier profilée ou de tôle extrudée en matière plastique. Ces tôles d'une largeur déterminée peuvent être tronçonnées à une longueur souhaitée qui correspond à n'importe quelle largeur de filtre souhaitée. Ensuite ces tronçons sont disposés côte à côte et reliés l'un à l'autre de manière étanche, par exemple par soudage, par assemblage, etc...

La figure 4 illustre un exemple de réalisation d'assemblage étanche de deux tronçons 26' et 26'' de tôle profilée. Un joint en matière élastique 47 est inséré entre les ondes latérales 48 et 49, agencées côte à côte, des deux tronçons 26' et 26''. Un premier élément de pinçage 50 recouvre et enserre les deux ondes latérales 48 et 49 tandis qu'un deuxième élément de pinçage 51, disposé du côté des tronçons qui est opposé au joint d'étanchéité 47, enserre l'une contre l'autre les extrémités latérales 52 et 53 de ces ondes 48 et 49.

Enfin, sur la figure 5, on peut voir une vue en coupe axiale d'un des tambours d'entraînement 2. Ce tambour est garni de nervures périphériques 54 qui servent au guidage des courroies de support.

On peut citer notamment les avantages suivants pour un filtre à courroie suivant l'invention :

La possibilité de construire aisément des filtres dont la courroie présente une très grande largeur.

Un guidage aisé des petites courroies de support moulées dans des gorges formées par les nervures des tambours d'entraînement.

La légèreté de la courroie composite, étant donné le minimum de matériau utilisé, pour la fabrication de la bande profilée.

Un montage aisé de la courroie composite par mise en place des petites courroies de support d'un poids léger et par emboîtement sur celles-ci de secteurs de tôles profilées assemblées. Déjà le poids léger de ces courroies de support facilite leur montage.

Un déplacement facilité de la courroie grâce au soulèvement de la bande profilée au-dessus des chambres de surpression, ce qui permet de réduire la pression spécifique sur les supports stationnaires, grâce à la rigidité de la bande profilée dans le sens transversal au déplacement, de réduire l'effort de traction sur les courroies de support et donc la puissance motrice installée, de diminuer l'usure des parties en frottement et d'opérer la filtration à un vide plus élevé.

Il doit être entendu que la présente invention n'est en aucune façon limitée à la forme de réalisation décrite ci-dessus et que bien des modifications peuvent y être apportées sans sortir du cadre du présent brevet.

On peut par exemple imaginer une courroie composite ne comprenant que deux courroies de support, toutes deux latérales. L'une d'entre elles ou les deux seraient simultanément agencées au-dessus d'une ou de deux boîtes à vide. On peut aussi prévoir plusieurs courroies de support intermédiaires entre les courroies de support latérales et plusieurs boîtes à vide disposées parallèlement.

On peut aussi imaginer une bande composite formée d'un seul tronçon de tôle, dont les deux bords latéraux sont alors mutuellement reliés.

Enfin, si la courroie composite suivant l'invention peut être mise en œuvre dans un dispositif connu tel qu'illustré sur la figure 6, cet exemple n'est nullement limitatif.

## Revendications

1. Filtre à courroie comprenant une courroie continue, qui est déplaçable par des moyens d'entraînement le long d'un trajet continu, une toile filtrante supportée par des ondes profilées dans la courroie, transversalement ou en oblique par rapport au sens de déplacement de cette dernière, au moins une boîte à vide où débouchent des orifices prévus à travers la courroie, et des supports stationnaires sur lesquels la courroie peut coulisser pendant son déplacement, caractérisé en ce que la courroie continue est une courroie composite (1) qui comprend une bande (26) continue en matière rigide, rendue flexible par un profil d'ondes transversales ou obliques par rapport au sens de déplacement (F) et de section constante ou non dans un sens transversal du déplacement, et au moins deux courroies (27, 28, 29) continues en matière élastique entraînées par les moyens d'entraînement susdits ces courroies de support ayant une largeur nettement inférieure à celle de la bande profilée (26), coulissant sur les supports stationnaires (30 à 33) pendant le déplacement de la courroie composite (1) et étant capables de coopérer avec la bande profilée (26), de façon à permettre l'entraînement mécanique de celle-ci, au moins une de ces courroies de support (28) présentant les orifices susdits (37) qui, en communication avec des ouvertures (35) correspondantes prévues dans la bande profilée (26), permettent une liaison étanche entre la ou les boîtes à vide (4) et l'espace compris entre la toile filtrante (9) et la bande profilée (26).

2. Filtre à courroie suivant la revendication 1, caractérisé en ce qu'il comprend, de chaque côté de la bande profilée continue (26), une courroie de support latérale (27, 29) qui est en prise de manière étanche avec la bande profilée (26) et qui présente, à l'extérieur de la bande profilée, un bourrelet en saillie vers le haut (39, 40) qui retient latéralement la matière à filtrer et le liquide filtré au-dessus de la bande profilée (26).

3. Filtre à courroie suivant la revendication 2, caractérisé en ce qu'il comprend en outre au moins une courroie de support intermédiaire (28) entre les deux courroies de support latérales (27,

4. Filtre à courroie suivant l'une quelconque des revendications 1 à 3, caractérisé en ce que chaque boîte à vide (4), qui s'étend longitudinalement sur une partie du trajet de déplacement de la courroie composite (1), présente, de part et d'autre de ses bords longitudinaux (55, 56), un desdits supports stationnaires (31, 32).

5. Filtre à courroie suivant l'une quelconque des revendications 1 à 4, caractérisé en ce qu'il comprend des moyens d'application d'une pression sur la face inférieure de la bande profilée (26), entre les courroies de support susdites (27 à 29).

6. Filtre à courroie suivant la revendication 5, caractérisé en ce que les moyens d'application d'une pression susdits comprennent une ou plusieurs chambres de surpression (43, 44) formées chacune entre, d'une part, les supports stationnaires (30, 31 ; 32, 33), situés l'un en face de l'autre, de deux courroies de support voisines (27, 28 ; 28, 29) et, d'autre part, la bande profilée (26) elle-même et une paroi inférieure (45 ; 46) reliant les supports stationnaires précités, ainsi que des moyens de pompage de fluide à l'intérieur de ces chambres de surpression.

7. Filtre à courroie, suivant l'une quelconque des revendications 1 à 6, caractérisé en ce que, en section transversale, l'ouverture (d) entre deux creux (36) successifs des ondes de la bande profilée (26) est plus étroite que dans la zone immédiatement supérieure et en ce que les courroies de support (27 à 29) présentent un profil de nervures (41, 42) qui, en section transversale, a une largeur (D) nettement supérieure à l'ouverture susdite, vers leur extrémité libre, et une largeur au moins égale à cette ouverture à leur base, les nervures (41, 42) étant enfoncées entre les creux (36) des ondes de la bande profilée en position de coopération des courroies de support avec la bande profilée.

8. Filtre à courroie suivant la revendication 7, caractérisé en ce que les courroies de support latérales (27, 29) présentent un profil de nervures (42) qui, en position de coopération avec la bande profilée (26), remplit totalement les ondes de la bande profilée, en rendant ainsi la bande profilée étanche sur ses bords latéraux.

9. Filtre à courroie suivant l'une quelconque des revendications 1 à 8, caractérisé en ce que la bande profilée (26) est formée de tronçons (26', 26'') de tôle profilée, découpés à une dimension correspondant à la largeur de la bande profilée, agencés l'un à côté de l'autre transversalement au sens de déplacement (F) de la courroie composite (1) et reliés l'un a l'autre de manière étanche.

10. Filtre à courroie suivant la revendication 9, caractérisé en ce que la bande profilée (26) comprend, pour l'assemblage de deux tronçons successifs (26', 26'') de tôle profilée, un joint (47) en matière élastique, étanche, qui est inséré entre les ondes latérales (48, 49) agencées côte à côte des deux tronçons (26', 26'') susdits, un premier élément de pinçage (50) qui recouvre et enserre mutuellement les deux ondes latérales (48, 49) et le joint inséré (47), et un deuxième élément de pinçage (51), qui est disposé du côté des tronçons (26', 26'') de tôle profilée opposé au joint d'étanchéité (47) et qui enserre les extrémités (52, 53) desdites ondes latérales l'une contre l'autre.

11. Filtre à courroie suivant l'une quelconque des revendications 1 à 10, caractérisé en ce que les moyens d'entraînement de la courroie composite sont des tambours (2, 3) présentant des nervures périphériques (54) de guidage pour les courroies de support (27 à 29).

12. Filtre à courroie suivant l'une quelconque des revendications 1 à 10, caractérisé en ce que la bande profilée (26) est en acier ou en matière plastique dure, et en ce que les courroies de support (27 à 29) sont en matériaux souples, de haute résilience, et renforcés.

## Claims

1. Belt filter comprising a continuous belt moveable along a continuous path by drive means, a filter cloth supported by corrugations profiled in the belt transversely or obliquely relative to the direction of movement of the latter, at least one vacuum box where orifices provided for the belt open out, and stationary supports on which the belt can slide during its movement, characterized in that the continuous belt is a composite belt (1) which comprises a continuous band (26) produced from rigid material and made flexible by a profile of corrugations transverse or oblique relative to the direction of movement (F) and of a cross-section constant or not in the transverse direction of movement, and at least two continuous supporting belts (27, 28, 29) made of elastic material and driven by the abovementioned drive means, these supporting belts having a width clearly less than that of the profiled band (26), sliding on the stationary supports (30 to 33) during the movement of the composite belt (1) and being capable of interacting with the profiled band (26), so as to allow the latter to be driven mechanically, at least one of these supporting belts (28) having the abovementioned orifices (37) which, in communication with corresponding apertures (35) provided in the profiled band (26), allow a sealing connection between the vacuum box or vacuum boxes (4) and the space contained between the filter cloth (9) and the profiled band (26).

2. Belt filter according to Claim 1, characterized in that it comprises, on each side of the continuous profiled band (26), a lateral supporting belt (27, 29) which is in sealing engagement with the profiled band (26) and which has, outside the profiled band an upwardly projecting bead (39, 40) laterally retaining the material to be filtered and the filtered liquid above the profiled band (26).

3. Belt filter according to Claim 2, characterized in that it possesses, furthermore, at least one intermediate supporting belt (28) between the two lateral supporting belts (27, 29).

4. Belt filter according to any one of Claims 1 to 3, characterized in that each vacuum box (4) extending longitudinally over some of the path of movement of the composite belt (1) has one of the said stationary supports (31, 32) on either side of its longitudinal edges (55, 56).

5. Belt filter according to any one of Claims 1 to 4, characterized in that it comprises means of exerting pressure on the lower face of the profiled band (26) between the abovementioned supporting belts (27 to 29).

6. Belt filter according to Claim 5, characterized in that the abovementioned means of exerting pressure comprise one or more overpressure chambers (43, 44), each formed between, on the one hand, the mutually confronting stationary supports (30, 31 ; 32, 33) of two adjacent supporting belts (27, 28 ; 28, 29) and, on the other hand, the profiled band (26) itself and a lower wall (45 ; 46) connecting the abovementioned stationary supports, and means of pumping fluid into these overpressure chambers.

7. Belt filter according to any one of Claims 1 to 6, characterized in that, in cross-section, the aperture (d) between two successive valleys (36) of the corrugations of the profiled band (26) is narrower than in the zone immediately above, and in that the supporting belts (27 to 29) have a profile of ribs (41, 42) which, in cross-section, has a width (D) clearly larger than the abovementioned aperture towards their free end and a width at least equal to this aperture at their base, the ribs (41, 42) being driven in between the valleys (36) of the corrugations of the profiled band in the position of interaction of the supporting belts with the profiled band.

8. Belt filter according to Claim 7, characterized in that the lateral supporting belts (27, 29) have a profile of ribs (42) which, in the position of interaction with the profiled band (26), completely fills the corrugations of the profiled band, thus sealing the profiled band along its lateral edges.

9. Belt filter according to any one of Claims 1 to 8, characterized in that the profiled band (28) is formed from portions (26', 26") of profiled sheet metal which are cut to a size corresponding to the width of the profiled band and which are arranged next to one another transversely relative to the direction of movement (F) of the composite belt (1) and are connected sealingly to one another.

10. Belt filter according to Claim 9, characterized in that, for the assembly of two successive portions (26', 26") of profiled sheet metal, the profiled band (26) possesses a sealing gland (47) made of elastic material, which is inserted between the lateral corrugations (48, 49), arranged alongside the two abovementioned portions (26', 26"), a first gripping element (50) which covers and clamps together the two lateral corrugations (48, 49) and the inserted gland (47), and a second gripping element (51) which is located on that side of the portions (26', 26") of profiled sheet metal opposite the sealing gland (47) and which clamps the ends (52, 53) of the said lateral corrugations against one another.

11. Belt filter according to any one of Claims 1 to 10, characterized in that the drive means of the composite belt are drums (2, 3) having peripheral guide ribs (54) for the supporting belts (27 to 29).

12. Belt filter according to any one of Claims 1 to 10, characterized in that the profiled band (26) is made of steel or hard plastic, and in that the supporting belts (27 to 29) are made of reinforced flexible materials of high resilience.

## Patentansprüche

1. Bandfilter mit einem durchgehenden Band, das durch Antriebsmittel entlang einer fortlaufenden Wegstrecke verschieblich ist, mit einem Filtertuch, das durch profilierte Wellen im Band abgestützt ist, die transversal oder schräg bezüglich der Verschieberichtung des letzteren verlaufen, mit wenigstens einem Vakuumkasten, in den quer im Band vorgesehene Öffnungen münden und mit stationären Abstützungen, auf denen das Band während seiner Verschiebung gleiten kann, dadurch gekennzeichnet, daß das durchgehende Band ein zusammengesetztes Band (1) ist, bestehend aus einem kontinuierlichen Band (26) aus steifem Material, das durch ein quer oder schräg zur Verschieberichtung (F) Verlaufendes Wellenprofil flexibel gemacht ist und in Richtung quer zur Verschieberichtung einen konstanten oder nicht konstanten Querschnitt hat, und aus wenigstens zwei durchgehenden Stützbändern (27, 28, 29) aus elastischem Material, die durch die Antriebsmittel angetrieben sind, wobei diese Stützbänder eine deutlich kleinere Breite als das profilierte Band (26) haben, während der Verschiebung des zusammengesetzten Bandes (1) auf den stationären Abstützungen (30 bis 33) gleiten und befähigt sind, mit dem profilierten Band (26) derart zusammenzuwirken, daß die mechanische Mitnahme dieses Bandes (26) ermöglicht ist, und wobei wenigstens eines der Stützbänder (28) die oben genannten Öffnungen (37) aufweist, die in Kommunikation mit korrespondierenden Öffnungen (35) im profilierten Band (26) eine dichte Verbindung zwischen dem oder den Vakuumkästen (4) und dem Raum zwischen dem Filtertuch (9) und dem profilierten Band (26) gestatten.

2. Bandfilter nach Anspruch 1, dadurch gekennzeichnet, daß er auf jeder Seite des profilierten, kontinuierlichen Bandes (26) ein seitliches Stützband (27, 29) umfaßt, welches in dichtem Eingriff mit dem profilierten Band (26) ist und an der Außenseite des profilierten Bandes einen nach oben vorspringenden Wulst (39, 40) aufweist, der das zu filtrierende Material und die filtrierte Flüssigkeit oberhalb des profilierten Bandes (26) seitlich zurückhält.

3. Bandfilter nach Anspruch 2, dadurch gekennzeichnet, daß er außerdem wenigstens ein Zwischen-Stützband (28) zwischen den beiden seitlichen Stützbändern (27, 29) umfaßt.

4. Bandfilter nach einem der Ansprüche 1 bis 3, dadurch gekennzeichnet, daß jeder Vakuumkasten (4), der sich in Längsrichtung über einen Teil der Verschiebestrecke des zusammengesetzten Bandes (1) erstreckt, zu beiden Seiten seiner Längsränder (55, 56) eine der erwähnten stationären Abstützungen (31, 32) aufweist.

5. Bandfilter nach einem der Ansprüche 1 bis 4, dadurch gekennzeichnet, daß er Mittel zum Aufbringen eines Druckes auf die untere Fläche des profilierten Bandes (26) zwischen den oben erwähnten Stützbändern (27 bis 29) umfaßt.

6. Bandfilter nach Anspruch 5, dadurch gekennzeichnet, daß die Mittel zum Aufbringen eines Druckes eine oder mehrere Druckkammern (33, 34) umfassen, die jeweils zwischen einerseits den einander gegenüberliegenden stationären Abstützunggen (30, 31 ; 32, 33) der beiden benachbarten Stützbänder (27, 28 ; 28, 29) und andererseits dem profilierten Band (26) selbst und einer unteren Wand (45 ; 46) ausgebildet sind, wobei die letztgenannten Wände die vorerwähnten stationären Abstützungen verbinden, und daß Mediumpumpmittel im Inneren dieser Überdruckkammern vorgesehen sind.

7. Bandfilter nach einem der Ansprüche 1 bis 6, dadurch gekennzeichnet, daß im Querschnitt die Öffnung (d) zwischen zwei aufeinanderfolgenden Hohlräumen (36) der Wellen des profilierten Bandes (26) enger als in der unmittelbar darüberliegenden Zone ist, und daß die Stützbänder (27 bis 29) ein Rippenprofil (41, 42) aufweisen, welches im Querschnitt gegen seine freien Enden zu eine deutlich größere Breite (D) als die oben erwähnte Öffnung und an seiner Basis eine dieser Öffnung wenigstens gleiche Breite hat, wobei die Rippen (41, 42) zwischen die Hohlräume (36) der Wellen des profilierten Bandes in Zusammenwirkungsstellung der Stützbänder mit dem profilierten Band eingetrieben sind.

8. Bandfilter nach Anspruch 7, dadurch gekennzeichnet, daß die seitlichen Stützbänder (27, 29) ein Rippenprofil (42) aufweisen, welches in Zusammenwirkungsstellung mit dem profilierten Band (26) die Wellen des profilierten Bandes vollständig ausfüllt und somit das profilierte Band an seinen seitlichen Rändern dicht macht.

9. Bandfilter nach einem der Ansprüche 1 bis 8, dadurch gekennzeichnet, daß das profilierte Band (26) aus Teilstücken (26', 26'') profilierten Bleches gebildet ist, die auf eine der Breite des profilierten Bandes entsprechende Abmessung zugeschnitten sind, Seite an Seite quer zur Verschieberichtung (F) des zusammengesetzten Bandes (1) angeordnet und miteinander dicht verbunden sind.

10. Bandfilter nach Anspruch 9, dadurch gekennzeichnet, daß das profilierte Band (26) für die Zusammenfügung zweier aufeinander folgender Teilstücke (26', 26'') profilierten Bleches ein Verbindungsteil (47) aus elastischem, dichtem Material umfaßt, welches zwischen die seitlichen Wellen (48, 49) eingesetzt wird, die Seite an Seite der beiden Teilstücke (26', 26'') angeordnet sind, daß ein erstes Klemmelement (50) die beiden seitlichen Wellen (48, 49) und das eingesetzte Verbindungsteil (47) gegenseitig überdeckt und einspannt, und daß ein zweites Klemmelement (51), welches auf derjenigen Seite der Teilstücke (26', 26'') der profilierten Bleche angeordnet ist, die dem Abdichtungs-Verbindungsteil (47) gegenüberliegt, die Enden (52, 53) der seitlichen Wellen gegenseitig einspannt.

11. Bandfilter nach einem der Ansprüche 1 bis 10, dadurch gekennzeichnet, daß die Antriebsmittel des zusammengesetzten Bandes als Walzen (2, 3) ausgebildet sind und periphere Führungsrippen (54) für die Stützbänder (27 bis 29) aufweisen.

12. Bandfilter nach einem der Ansprüche 1 bis 10, dadurch gekennzeichnet, daß das profilierte Band (26) aus Stahl oder aus hartem Plastikmaterial ist, und daß die Stützriemen (27 bis 29) aus nachgiebigem, verstärktem Material hoher Elastizität bestehen.

FIG. 1

FIG. 2

FIG. 3

FIG. 4

**FIG. 6**

**FIG. 5**